(19)

Europäisches
Patentamt
European
Patent Office
Office européen
des brevets

(11) **EP 4 141 689 A1**

(12) **EUROPEAN PATENT APPLICATION**

(43) Date of publication:
**01.03.2023   Bulletin 2023/09**

(21) Application number: **22197097.3**

(22) Date of filing: **22.09.2022**

(51) International Patent Classification (IPC):
**G06F 16/23** $^{(2019.01)}$

(52) Cooperative Patent Classification (CPC):
**G06F 16/2329**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **24.09.2021   CN 202111124033**

(71) Applicant: **Beijing Baidu Netcom
Science Technology Co., Ltd.
Beijing 100085 (CN)**

(72) Inventors:
• **YIN, Zhihui
Beijing, 100085 (CN)**
• **CAO, Biao
Beijing, 100085 (CN)**

(74) Representative: **Studio Torta S.p.A.
Via Viotti, 9
10121 Torino (IT)**

(54) **METHOD AND APPARATUS FOR READING DATA, ELECTRONIC DEVICE AND STORAGE MEDIUM**

(57)     A method for reading data includes: receiving (101) a data reading request; acquiring (1020 a data writing file in response to determining that the data reading request triggers a reading-writing conflict event, in which the data writing file includes a writing version number and transaction information; obtaining (103) an adjusted writing version number by adjusting the writing version number based on the request version number in response to determining that the data reading request satisfies a version adjustment condition based on the request version number, the writing version number and the transaction information; and performing (104) data reading based on the data reading address and the adjusted writing version number.

```
┌──────────────────────────────────────────────────────────┐
│ receive a data reading request including a request        │  101
│ version number and a data reading address                 │
└──────────────────────────────────────────────────────────┘
                             │
                             ▼
┌──────────────────────────────────────────────────────────┐
│ acquire data writing file including a writing version     │  102
│ number and transaction information in response to         │
│ determining that the data reading request triggers a      │
│ reading-writing conflict event                            │
└──────────────────────────────────────────────────────────┘
                             │
                             ▼
┌──────────────────────────────────────────────────────────┐
│ adjust the writing version number based on the request    │  103
│ version number in response to determining that the data   │
│ reading request satisfies a version adjustment condition  │
│ based on the request version number, the writing version  │
│ number and the transaction information                    │
└──────────────────────────────────────────────────────────┘
                             │
                             ▼
┌──────────────────────────────────────────────────────────┐
│ perform data reading based on the data reading address    │  104
│ and the adjusted writing version number                   │
└──────────────────────────────────────────────────────────┘
```

FIG. 1

EP 4 141 689 A1

**Description**

**TECHNICAL FIELD**

The present disclosure relates to a field of data processing technologies, specifically to fields of artificial intelligence (AI) technologies such as cloud computing and deep learning (DL), and particularly to a method and an apparatus for reading data, an electronic device and a storage medium.

**BACKGROUND**

At present, in the distributed database system, in order to ensure the snapshot isolation level of the transaction, a two-phase submission method is usually used to complete the data writing, and the method can be as follows.

1. Write an intent (which is an information object used for communication between components) structure containing data content, data version and transaction information at a location of relevant data, and record information such as the transaction state.
2. After confirming that the transaction is successfully submitted, the intent structure is converted into actual data and version information to complete the writing. When the submission of the transaction fails or cancels, the intent structure will be cleaned up.

**SUMMARY**

The disclosure provides a method and an apparatus for reading data, a device and a storage medium.
According to one aspect of the disclosure, a method for reading data is provided. The method includes: receiving a data reading request, in which the data reading request includes a request version number and a data reading address; acquiring a data writing file in response to determining that the data reading request triggers a reading-writing conflict event, in which the data writing file includes a writing version number and transaction information; obtaining an adjusted writing version number by adjusting the writing version number based on the request version number in response to determining that the data reading request satisfies a version adjustment condition based on the request version number, the writing version number and the transaction information; and performing data reading based on the data reading address and the adjusted writing version number.
According to another aspect of the disclosure, an apparatus for reading data is provided. The apparatus includes: a receiving module, configured to receive a data reading request, in which the data reading request includes a request version number and a data reading address; an acquiring module, configured to acquire a data writing file in response to determining that the data reading request triggers a reading-writing conflict event, in which the data writing file includes a writing version number and transaction information; an adjusting module, configured to obtain an adjusted writing version number by adjusting the writing version number based on the request version number in response to determining that the data reading request satisfies a version adjustment condition based on the request version number, the writing version number and the transaction information; and a reading module, configured to perform data reading based on the data reading address and the adjusted writing version number.
According to another aspect of the disclosure, an electronic device is provided. The electronic device includes: at least one processor; and a memory communicatively connected to the at least one processor; in which the memory is stored with instructions executable by the at least one processor, and the instructions are performed by the at least one processor, to cause the at least one processor to perform the method for reading data.
According to another aspect of the disclosure, a non-transitory computer readable storage medium having computer instructions stored thereon is provided. The computer instructions are configured to cause a computer to perform the method for reading data.
According to another aspect of the disclosure, a computer program product including a computer program is provided. The computer program is configured to cause a processor to perform the method for reading data when executed by the processor.
It should be understood that, the content described in the part is not intended to identify key or important features of embodiments of the disclosure, nor intended to limit the scope of the disclosure. Other features of the disclosure will be easy to understand through the following specification.

**BRIEF DESCRIPTION OF THE DRAWINGS**

The drawings are intended to better understand the solution, and do not constitute a limitation to the disclosure.

FIG. 1 is a flowchart illustrating a method for reading data according to some embodiments of the present disclosure.
FIG. 2 is a flowchart illustrating a method for reading data according to some embodiments of the present disclosure.
FIG. 3 is a flowchart illustrating a method for reading data according to some embodiments of the present disclosure.
FIG. 4 is a flowchart illustrating a method for reading data according to some embodiments of the present disclosure.
FIG. 5 is a flowchart illustrating a method for reading data according to some embodiments of the present disclosure.
FIG. 6 is a block diagram illustrating an apparatus for reading data according to some embodiments of the disclosure.
FIG. 7 is a block diagram illustrating an electronic device configured to perform a method for reading data according to some embodiments of the disclosure.

## DETAILED DESCRIPTION

The embodiments of the disclosure are described as below with reference to the accompanying drawings, which include various details of embodiments of the disclosure to facilitate understanding, and should be considered as examples. Therefore, those skilled in the art should realize that various changes and modifications may be made to the embodiments described herein without departing from the scope of the disclosure. Similarly, for clarity and conciseness, descriptions of well-known functions and structures are omitted in the following descriptions.

A method and an apparatus for reading data and an electronic device in the embodiment of the disclosure are described below with reference with attached drawings.

Data processing means manually or automatically processing data through an automation devices, where that data is an expression form of facts, concepts or instructions. Data becomes information after interpreted and given certain meaning. Data processing is collection, storage, retrieval, processing, conversion and transmission of data.

The basic purpose of data processing is to extract and derive data valuable and meaningful to some certain people from a large amount of data that may be disordered and difficult to understand.

Data processing is a basic part of system engineering and automatic control. Data processing runs through all areas of social production and social life. The development of data processing technology and breadth and depth of applications thereof greatly affect the development of human society.

Cloud computing, as a kind of distributed computing, means that huge data computing processing programs are decomposed into numerous applets through a network "cloud", and then the applets are processed and analyzed through a system consisting of a plurality of servers to obtain a result and returned to a user. An early stage of cloud computing, simply speaking, is a simple distributed computing, which solves task distributing and combines calculation results. Thus, cloud computing is also referred to as grid computing. Through the technology, tens of thousands of data may be processed within a short period of time (seconds), thereby achieving a powerful network service. The cloud service at this stage is not merely a distributed computing, but is a result of a hybrid evolution and jump of computer technologies such as distributed computing, utility computing, load balance, parallel computing, network storage, hot backup redundancy and virtualization.

Deep learning (DL) is a new research direction in the field of machine learning. DL learns inherent law and representation hierarchy of sample data, and information obtained in the learning process is of great help in interpretation of data such as words, images and sound. Its final goal is that the machine may have analytic learning ability like humans, which may recognize data such as words, images, sound, etc. DL is a complicated machine learning algorithm, which has far outperformed the related art in speech and image recognition.

Artificial intelligence (AI) is a subject that learns simulating certain thinking processes and intelligent behaviors (such as learning, reasoning, thinking, planning, etc.) of human beings by using a computer, which covers hardware-level technologies and software-level technologies. AI hardware technologies generally include technologies such as sensor, dedicated AI chips, cloud computing, distributed storage, big data processing, etc.; AI software technologies include computer vision technology, voice recognition technology, natural language processing(NLP) technology, deep learning(DL), big data processing technology, knowledge graph technology, etc.

The method for reading data in embodiments of the disclosure may be performed by an electronic device. The electronic device may be a personal computer (PC), a tablet computer, a handheld computer and a server, which will not be limited here.

In embodiments of the disclosure, a processing component, a memory component and a drive component may be configured in the electronic device. For examples, the drive component and the processing component may be integrated, the memory component may store an operating system, an application or other program modules, and the processing component may achieve a method for reading data according to embodiments of the disclosure by executing an application program stored in the memory component.

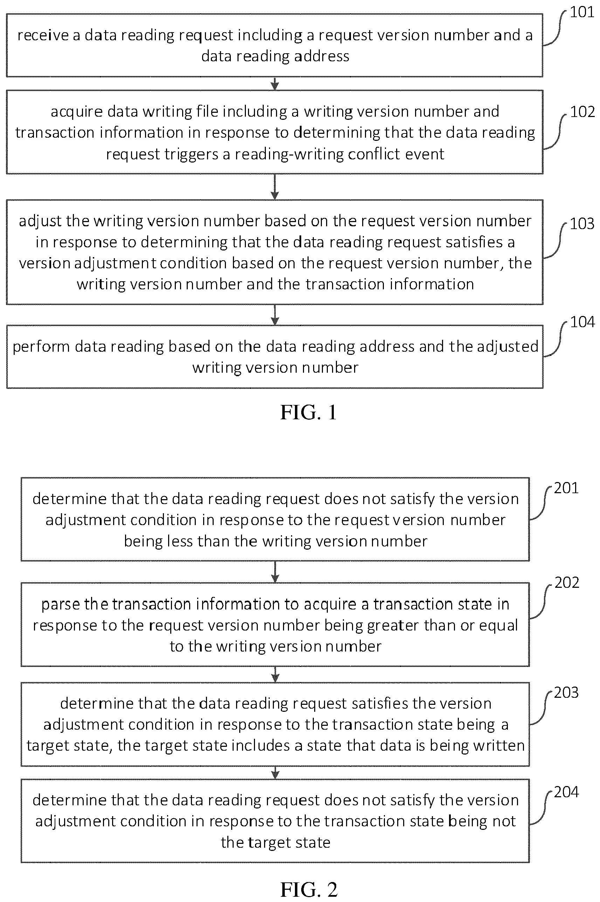

FIG. 1 is a flowchart illustrating a method for reading data according to some embodiments of the disclosure.

The method for reading data according to embodiments of the disclosure may be performed by an apparatus for reading data according to embodiments of the disclosure. The apparatus may be configured in an electronic device to achieve receiving a data reading request, the data reading request includes a request version number and a data reading address. A current data writing file is acquired in response to determining that the data reading request triggers a reading-writing conflict event. The data writing file includes a writing version number and transaction information. The writing version number is adjusted based on the request version number in response to determining, based on the request version number, the writing version number and the transaction information, that the data reading request satisfies a version adjustment condition. The data reading is performed based on the data reading address and an adjusted writing version number. Therefore, the reading-writing conflict may be rapidly processed on the premise of ensuring the transaction snapshot isolation level, to avoid jams or blocking, thereby enhancing availability and reliability of a database system.

As a possible case, the method for reading data according to embodiments of the disclosure may be executed by a server. The server may be a cloud server, that is, the method for reading data may be executed on the cloud side.

As illustrated in FIG. 1, the method for reading data includes the following.

At block 101, a data reading request is received. The data reading request includes a request version number and a data reading address.

In embodiments of the disclosure, a user (related personnel) may create the data reading request through an application (for example, a certain client). The data reading request is sent to an electronic device through the application, that is, the data reading request is sent to a database system installed (set) on the electronic device. The electronic device may respond to the data reading request upon receiving the data reading request.

It is noteworthy that the database system mentioned here may include a distributed database and a common database.

As a possible case, an application installed (set) on an electronic device may automatically create a corresponding data reading request based on its own setting, and send the data reading request to an associated database system (that is, a database system installed (set) on the electronic device), and the database system may respond to the data reading request upon receiving the data reading request.

At block 102, a current data writing file is acquired in response to triggering a reading-writing conflict event by the data reading request, the data writing file includes a writing version number and transaction information.

An electronic device (or a database system in an electronic device) detects whether the reading-writing conflict event is triggered by the data reading request in real time through a related application programming interface (API), so that the electronic device may response to the reading-writing conflict event in time in response to detecting that the reading-writing conflict event is triggered.

The electronic device may detect the reading-writing conflict event through the related API, and when determining detecting that the reading-writing conflict event is triggered by the data reading request, acquire a current data writing file in response to detecting that there is a reading-writing conflict event.

It is noteworthy that, the data writing file mentioned here may be a file of an intent structure. The data writing file may further include data content to be written. In addition, the transaction information mentioned here may include a transaction state. The transaction state may be a state that data is being written, a state that data has been written or a state that data writing has an error. The data writing file may correspond to a data reading address.

At block 103, it is determined whether the data reading request satisfies a version adjustment condition based on the request version number, the writing version number and the transaction information. It is noteworthy that, the version adjustment condition mentioned here can be calibrated based on the actual condition.

In the block 103, the writing version number is adjusted based on the request version number in response to determining, based on the request version number, the writing version number and the transaction information, that the data reading request satisfies the version adjustment condition. It is noteworthy that, the version adjustment condition mentioned here may be calibrated based on the actual condition.

The writing version number may be adjusted based on the request vision number through a preset adjustment strategy. The preset adjustment strategy may be selected based on the actual condition.

For example, the data writing file can be parsed by a database system after the electronic device obtains the data write file, to acquire the writing version number and transaction information from the data writing file. The electronic device can determine whether the data reading request satisfies the version adjustment condition based on the request version number, the writing version number and the transaction information. In response to determining that the data reading request satisfies the version adjustment condition, the writing version number may be correspondingly adjusted based on the preset adjustment strategy and the request version number. For example, request version number is increased by a certain value (such as 1, 2, 3 and 4), and the result may be taken as the latest writing version number to achieve the adjustment of the writing version number.

At block 104, data reading is performed based on the data reading address and the adjusted writing version number.

The electronic device may parse the data reading address through an address parsing tool (for example, a plugin) to acquire a data storing location, and read data based on the data storing location and the adjusted writing version number.

It is noteworthy that, the address parsing tool mentioned here may be pre-stored in the storage space of the electronic device, to facilitate invoking. The storage space is not limited to a tangible or hardware storage space, for example, a hard disk, and further may be a storage space (i.e., a cloud storage space) of a server connected to the electronic device.

After the adjustment of the writing version number is completed, the electronic device may invoke the address parsing tool from its own storage space to parse the data reading address to acquire the data storing location, and read data corresponding to the latest writing version number that is less than the adjusted writing version number stored at the data storing location.

As a possible case, the address parsing tool may be pre-installed in the database system, to be directly used by the database system when necessary.

According to embodiments of the disclosure, the data reading request including the request version number and the data reading address is received, and the current data writing file including the writing version number and the transaction information is acquired in response to determining that the data reading request triggers the reading-writing conflict event, the writing version number is adjusted based on the request version number in response to determining, based on the request version number, the writing version number and the transaction information, that the data reading request satisfies the version adjustment condition, and data is read based on the data reading address and the adjusted writing version number. Therefore, the reading-writing conflict may be rapidly processed on the premise of ensuring a transaction snapshot isolation level, to avoid jams or blocking, thereby enhancing availability and reliability of a database system.

In some implementations, the data writing file may further include a data writing address and the method may further include determining that the data reading request triggers the reading-writing conflict event in response to the data writing address being the same as the data reading address.

When the data writing address is the same as the data reading address, it indicates that a version update is being performed at this address. In this case, it cannot be determined whether the data has been successfully written, and thus it cannot be determined whether the currently written data to this address can be read, thereby triggering the reading-writing conflict event.

After obtaining the data reading request, the electronic device (or the database system in the electronic device) may parse the data reading request to acquire the data reading address, and detect whether a version update is being performed on the data at this data reading address (i.e., whether it is the state that the data is being written). In response to determining that the version update is being performed, it indicates that the data reading address is the same as the data writing address. In this case, it may be determined that the data reading request triggers the reading-writing conflict event. Therefore, the reading-writing conflict event may be responded timely, which improves the speed of processing the reading-writing conflict event.

Further, as illustrated in FIG. 2, the method for reading data may further include the following.

At block 201, it is determined that the data reading request does not satisfy the version adjustment condition in response to the request version number being less than the writing version number.

At block 202, the transaction information is parsed to acquire a transaction state in response to the request version number being greater than or equal to the writing version number.

It is noteworthy that, in general, the situation that the request version number is equal to the writing version number will not occur in a database system.

After obtaining the data writing file, the electronic device may parse the data writing file by a database system, to acquire the writing version number and transaction information. The electronic device may determine whether the request version number is less than the writing version number through the related API. In response to determining that the request version number is less than the writing version number, it may be determined that the data reading request does not satisfy the version adjustment condition. Since in the data version management of the snapshot isolation, the data reading request can only be used to read the latest data whose version number is less than or equal to its request version number, the data reading request is used to read the data that has been written and there is no need to adjust the writing version number. In response to determining that the request version number is not less than the writing version number, the electronic device parses the transaction information to acquire the transaction state and further determines whether the data reading request satisfies the version adjustment condition based on the transaction state.

The transaction information may be parsed based on a preset transaction information parsing algorithm. The preset transaction information parsing algorithm may be determined based on the actual condition.

After obtaining the transaction information, the electronic device may parse the transaction information based on the preset transaction information parsing algorithm to acquire the transaction state.

As a possible case, the electronic device may further parse transaction information based on a transaction information parsing model to acquire the transaction state. It is noteworthy that, the transaction information parsing model mentioned here may be trained in advance and pre-stored in the storage space of the electronic device for the convenience of invoking. The storage space is not limited to a tangible or hardware storage space, such as a hard disk, and further may be a cloud storage space connected to an electronic device.

Training and generation of the transaction information parsing model may be executed by a relevant training server. The training server may be a cloud server, and also may be a host of a computer. The training server may establish a communication with the electronic device that is configured to perform the method for reading data according to embodiments of the disclosure. The communication may be at least one of wireless network connection and wired network connection. The training server may send the trained transaction information parsing model to the electronic device so that the electronic device can invoke the trained transaction information parsing model when necessary, thereby greatly reducing the computing pressure of the electronic device.

After obtaining the transaction information, the the electronic device may invoke the transaction information parsing model from its own storage space and input the transaction information to the transaction information parsing model to parse the transaction information. Therefore, the transaction state corresponding to the transaction information output by the transaction information parsing model can be obtained.

As another possible case, the electronic device may parse the transaction information through a parsing tool (for example, a plugin) to acquire the transaction state.

At block 203, it is determined that the data reading request satisfies the version adjustment condition in response to the transaction state being a target state, where the target state includes a state that data is being written.

At block 204, it is determined that the data reading request does not satisfy the version adjustment condition in response to the transaction state being not the target state.

The electronic device may determine whether the transaction state is the target state through related APIs. In response to determining that the transaction state is the target state, the data reading request satisfies the version adjustment condition. In response to determining that the transaction state is not the target state, the data reading request does not satisfy the version adjustment condition.

After obtaining the transaction state, the electronic device may determine whether the transaction state is the target state, that is, the state that data is being written, through the related APIs. In response to determining that the transaction state is the target state, it indicates that the writing of the current data has not been completed and the current data cannot be read. In this case, the writing version number needs to be adjusted, that is, the version adjustment condition is satisfied. In response to determining that the transaction state is not the target state, it indicates that the writing of the current data has been completed and the current data may be read, or it indicates that the writing of the current data has an error and has been terminated and the data corresponding to previous versions before the above writing version number may be read. In this case, the writing version does not need to be adjusted, that is, the version adjustment condition is not satisfied.

Therefore, it may be exactly determined whether the data reading request satisfies the version adjustment condition, thereby providing a condition basis for adjusting the writing version number.

The method may further include performing data reading based on the request version number and the data reading address in response to the request version number being less than the writing version number.

The electronic device may invoke an address resolution tool from its own storage space to parse the read data address to acquire a storage location of data, and read the latest write data with the version number stored at the storage location being less than or equal to the request version number.

Therefore, the data that has been written may be read timely in response to the current request version number being less than the current writing version number, thereby avoiding jams and blocking.

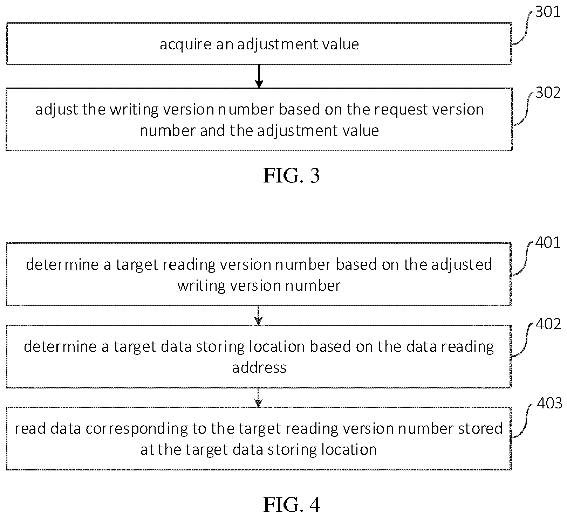

As illustrated in FIG. 3, adjusting the writing version number based on the request version number in response to determining that the data reading request satisfies the version adjustment condition based on the request version number, the writing version number and the transaction information may include the following.

At block 301, an adjustment value is acquired. The adjustment value may be calibrated based on the actual condition. For example, the adjustment value is 1, 2, 3 or 4, which is not limited here.

It is noteworthy that, the adjustment value mentioned here may be preset in the storage space of the electronic device, to facilitate invoking.

As a possible case, the adjustment value may be preset in a database system, to be directly used by the database system when necessary.

At block 302, the writing version number is adjusted based on the request version number and the adjustment value.

After the request version number and the adjustment value are obtained, the writing version number may be adjusted by the following formula (1):

$$Va = Vb + 1 \qquad\qquad (1)$$

where, Va denotes an adjusted writing version number, Vb denotes the request version number, and 1 is the adjustment value.

After determining that the data reading request satisfies the version adjustment condition, the electronic device may invoke the adjustment value from its own storage space, and determine the adjusted writing version number based on the formula (1) by taking a result as the latest writing version number, to achieve the adjustment of the writing version number.

Therefore, the data may be rapidly read on the premise of not damaging the transaction snapshot isolation level by adjusting the writing version number, and the system availability is not affected by the reading-writing conflict.

As illustrated in FIG. 4, performing the data reading based on the data reading address and the adjusted writing version number may include the following.

At block 401, a target reading version number is determined based on the adjusted writing version number.

After the writing version number is adjusted, a latest version number less than the adjusted writing version number may be taken as the target reading version number.

At block 402, a target data storing location is determined based on the data reading address.

After determining the target reading version number, the electronic device may invoke the address parsing tool from its own storage space to parse the data reading address to acquire a storing location of target data (i.e., the target data storing location).

At block 403, data corresponding to the target reading version number stored at the target data storing location is read.

After obtaining the target data storing location, the electronic device may read the data, from the target data storing location, corresponding to the target reading version number.

Therefore, rapid processing of transaction conflicts may be achieved, to avoid blocking.

With the method for reading data according to embodiments of the disclosure, the data reading request including the request version number and the data reading address is received, and the data write file including the writing version number and the transaction information is acquired in response to determining that the data reading request triggers the reading-writing conflict event, the writing version number is adjusted based on the request version number in response to determining that the data reading request satisfies the version adjustment condition based on the request version number, the writing version number and the transaction information, and the data reading is performed based on the data reading address and the adjusted writing version number. Therefore, the reading-writing conflict may be rapidly processed on the premise of ensuring the transaction snapshot isolation level, to avoid blocking and jams, thereby enhancing availability and reliability of a database system.

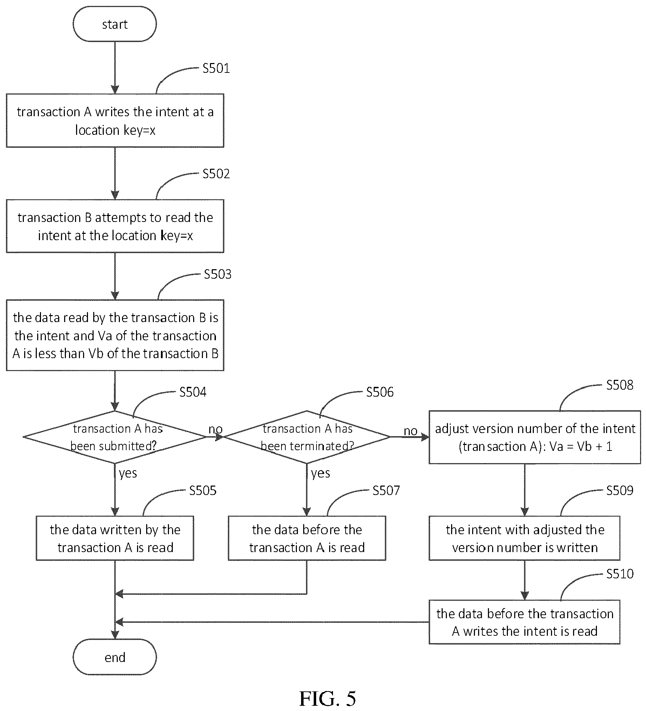

In order to make those skilled in the art understand the disclosure more clearly, FIG. 5 is a flowchart illustrating a method for reading data according to embodiments of the disclosure. As illustrated in FIG. 5, the method for reading data includes the following.

At S501, the transaction A writes the data (such as intent) at a location key=x.

At S502, the transaction B attempts to read the data at the location key=x.

At S503, the data read by the transaction b is the intent and the version number Va of the transaction A is less than the version number Vb of the transaction B.

At S504, it is determined whether the transaction A has been submitted. If determining that the transaction A has been submitted, the block S505 is performed. If determining that the transaction A has not been submitted, the block S506 is performed.

At S505, the data written by the transaction A is read.

At S506, it is determined whether the transaction A has been terminated. If determining that the transaction A has been terminated, the block S507 is performed. If determining that the transaction A has not been terminated, the block S508 is performed.

At S507, the data before the transaction A is read.

At S508, the version number of the intent (i.e., the transaction A) is adjusted: Va = Vb + 1.

At S509, the intent with the adjusted version number is written.

At S510, the data before writing the transaction A is read.

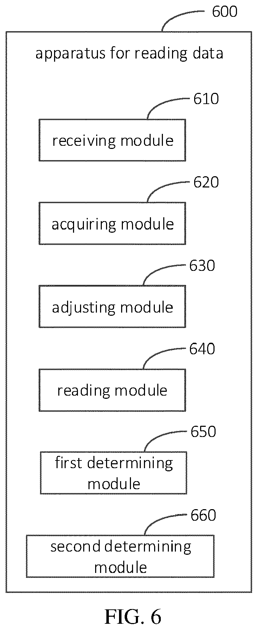

FIG. 6 is a block diagram illustrating an apparatus for reading data according to embodiments of the disclosure.

In the apparatus for reading data according to embodiments of the disclosure, the apparatus may be included in an electronic device to perform the following. A data reading request including a request version number and a data reading address is received, a current data write file including a writing version number and transaction information is acquired in response to determining that the data reading request triggers a reading-writing conflict event, the writing version number is adjusted based on the request version number in response to determining, based on request version number, the writing version number and the transaction information, that the data reading request satisfies a version adjustment condition, and data reading is performed based on the data reading address and the adjusted writing version number. Therefore, reading-writing conflicts may be rapidly processed on the premise of ensuring a transaction snapshot isolation level, to avoid blocking and jams, thereby enhancing availability and reliability of a database system.

As illustrated in FIG. 6, the apparatus 600 includes a receiving module 610, an acquiring module 620, an adjusting module 630 and a reading module 640.

The receiving module 610 is configured to receive a data reading request. The data reading request includes a request version number and a data reading address.

In embodiments of the disclosure, a user (related personnel) may create the data reading request through an application (for example, a certain client). The data reading request is sent to the receiving module 610 through the application, that is, the data reading request is sent to a database system installed (set) on the electronic device. The receiving module 610 may respond to the data reading request upon receiving the data reading request.

It is noteworthy that the database system mentioned here may include a distributed database and a common database.

As a possible case, an application installed (set) on an electronic device may automatically create a corresponding data reading request based on its own setting, and send the data reading request to an associated database system (that is, a database system installed (set) on the electronic device), and the database system may respond to the data reading request upon receiving the data reading request. The apparatus 600 mentioned here can be included in the database system of the electronic device.

The acquiring module 620 is configured to acquire a current data writing file in response to determining that the data reading request triggers a reading-writing conflict event. The data writing file includes a writing version number and transaction information.

The acquiring module 620 may detect whether the reading-writing conflict event is triggered by the data reading request in real time through a related application programming interface (API), so that the acquiring module 620 may response to the reading-writing conflict event in time in response to detecting that the reading-writing conflict event is triggered.

The acquiring module 620 may detect the reading-writing conflict event through the related API, and when determining detecting that the reading-writing conflict event is triggered by the data reading request, acquire a current data writing file in response to detecting that there is a reading-writing conflict event.

It is noteworthy that, the data writing file mentioned here may be a file of an intent structure. The data writing file may further include data content to be written. In addition, the transaction information mentioned here may include a transaction state. The transaction state may be a state that data is being written, a state that data has been written or a state that data writing has an error. The data writing file may correspond to a data reading address.

The adjusting module 630 is configured to adjust the writing version number based on the request version number in response to determining that the data reading request satisfies a version adjustment condition based on the request version number, the writing version number and the transaction information. It is noteworthy that, the version adjustment condition mentioned here can be calibrated based on the actual condition.

The adjusting module 630 may adjust the writing version number based on the request vision number through a preset adjustment strategy. The preset adjustment strategy may be selected based on the actual condition.

For example, the data writing file can be parsed by a database system after the acquiring module 620 obtains the data write file, to acquire the writing version number and transaction information from the data writing file. The acquiring module 620 can determine whether the data reading request satisfies the version adjustment condition based on the request version number, the writing version number and the transaction information. In response to determining that the data reading request satisfies the version adjustment condition, the writing version number may be correspondingly adjusted by the acquiring module 620 based on the preset adjustment strategy and the request version number. For example, request version number is increased by a certain value (such as 1, 2, 3 and 4), and the result may be taken as the latest writing version number to achieve the adjustment of the writing version number.

The reading module 640 is configured to perform data reading based on the data reading address and the adjusted writing version number.

The reading module 640 may parse the data reading address through an address parsing tool (for example, a plugin) to acquire a data storing location, and read data based on the data storing location and the adjusted writing version number.

It is noteworthy that, the address parsing tool mentioned here may be pre-stored in the storage space of the electronic device, to facilitate invoking. The storage space is not limited to a tangible or hardware storage space, for example, a hard disk, and further may be a storage space (i.e., a cloud storage space) of a server connected to the electronic device.

After the adjustment of the writing version number is completed by the adjusting module 620, the reading module 640 may invoke the address parsing tool from its own storage space to parse the data reading address to acquire the data storing location, and read data corresponding to the latest writing version number that is less than the adjusted writing version number stored at the data storing location.

As a possible case, the address parsing tool may be pre-installed in the database system, to be directly used by the database system when necessary.

According to embodiments of the disclosure, the data reading request including the request version number and the data reading address is received, and the current data writing file including the writing version number and the transaction information is acquired in response to determining that the data reading request triggers the reading-writing conflict event, the writing version number is adjusted based on the request version number in response to determining, based on the request version number, the writing version number and the transaction information, that the data reading request satisfies the version adjustment condition, and data is read based on the data reading address and the adjusted writing version number. Therefore, the reading-writing conflict may be rapidly processed on the premise of ensuring a transaction snapshot isolation level, to avoid jams or blocking, thereby enhancing availability and reliability of a database system.

In some implementations, the data writing file may further include a data writing address and the apparatus 600 may further include a first determining module 650, configured to determine that the data reading request triggers the reading-writing conflict event in response to the data writing address being the same as the data reading address.

In some examples, the apparatus 600 may further include a second determining module 660. The second determining module 660 is configured to: determine that the data reading request does not satisfy the version adjustment condition in response to the request version number being less than the writing version number; parse the transaction information to acquire a transaction state in response to the request version number being greater than or equal to the writing version number; determine that the data reading request satisfies the version adjustment condition in response to the transaction state being a target state; and determine that the data reading request does not satisfy the version adjustment condition in response to the transaction state being not the target state. The target state includes a state that data is being written.

In some examples, the second determining module 660 is further configured to: perform data reading based on the request version number and the data reading address in response to the request version number being less than the writing version number.

In some examples, the adjusting module 630 is configured to: acquire an adjustment value; and adjust the writing version number based on the request version number and the adjustment value.

In some examples, the reading module 640 is configured to: determine a target reading version number based on the adjusted writing version number; determine a target data storing location based on the data reading address; and read data corresponding to the target reading version number stored at the target data storing location.

It is noteworthy that the foregoing explanation of the embodiment of the method for reading data is also applied to an apparatus for reading data in the embodiment, which will not be repeated here.

With the apparatus for reading data according to embodiments of the disclosure, the data reading request including the request version number and the data reading address is received, and the data write file including the writing version number and the transaction information is acquired in response to determining that the data reading request triggers the reading-writing conflict event, the writing version number is adjusted based on the request version number in response to determining that the data reading request satisfies the version adjustment condition based on the request version number, the writing version number and the transaction information, and the data reading is performed based on the data reading address and the adjusted writing version number. Therefore, the reading-writing conflict may be rapidly processed on the premise of ensuring the transaction snapshot isolation level, to avoid blocking and jams, thereby enhancing availability and reliability of a database system.

Collection, storage, use, processing, transmission, provision and disclosure of the user personal information involved in the technical solution of the disclosure comply with relevant laws and regulations, and do not violate public order and good customs.

According to the embodiment of the disclosure, an electronic device, a readable storage medium and a computer program product are further provided in the disclosure.

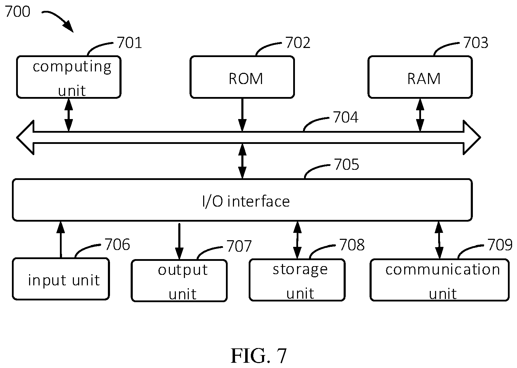

FIG. 7 illustrates a schematic block diagram of an example electronic device 700 configured to implement the embodiment of the disclosure. An electronic device is intended to represent various types of digital computers, such as laptop computers, desktop computers, workstations, personal digital assistants, servers, blade servers, mainframe computers, and other suitable computers. An electronic device may also represent various types of mobile apparatuses, such as personal digital assistants, cellular phones, smart phones, wearable devices, and other similar computing devices. The components shown herein, their connections and relations, and their functions are merely examples, and are not intended to limit the implementation of the disclosure described and/or required herein.

As illustrated in FIG. 7, a device 700 includes a computing unit 701, configured to execute various appropriate actions and processes according to a computer program stored in a read-only memory (ROM) 702 or loaded from a storage unit 708 to a random access memory (RAM) 703. In a RAM 703, various programs and data required by an operation of a device 700 may be further stored. A computing unit 701, a ROM 702 and a RAM 703 may be connected with each other by a bus 704. An input/output (I/O) interface 705 is also connected to a bus 704.

A plurality of components in the device 700 are connected to an I/O interface 705, and includes: an input unit 706, for example, a keyboard, a mouse, etc.; an output unit 707, for example various types of displays, speakers; a storage unit 708, for example a magnetic disk, an optical disk; and a communication unit 709, for example, a network card, a modem, a wireless transceiver. The communication unit 709 allows a device 700 to exchange information/data through a computer network such as internet and/or various types of telecommunication networks and other devices.

The computing unit 701 may be various types of general and/or dedicated processing components with processing and computing ability. Some examples of a computing unit 701 include but not limited to a central processing unit (CPU), a graphics processing unit (GPU), various dedicated artificial intelligence (AI) computing chips, various computing units running a machine learning model algorithm, a digital signal processor (DSP), and any appropriate processor, controller, microcontroller, etc. The computing unit 701 executes various methods and processings as described above, for example, a method for reading data. For example, in some embodiments, the method for reading data may be further achieved as a computer software program, which is physically contained in a machine readable medium, such as a storage unit 708. In some embodiments, a part or all of the computer program may be loaded and/or installed on the device 700 via a ROM 702 and/or a communication unit 709. When the computer program is loaded on a RAM 703 and executed by a computing unit 701, one or more blocks in the method for reading data as described above may be performed. Alternatively, in other embodiments, a computing unit 701 may be configured to perform a method for reading data in other appropriate ways (for example, by virtue of a firmware).

Various implementation modes of the systems and technologies described above may be achieved in a digital electronic circuit system, a field programmable gate array (FPGA), an application-specific integrated circuit (ASIC), an application specific standard product (ASSP), a system-on-chip (SOC) system, a complex programmable logic device, a computer hardware, a firmware, a software, and/or combinations thereof. The various implementation modes may include: being implemented in one or more computer programs, and the one or more computer programs may be executed and/or interpreted on a programmable system including at least one programmable processor, and the programmable processor may be a dedicated or a generalpurpose programmable processor that may receive data and instructions from a storage system, at least one input apparatus, and at least one output apparatus, and transmit the data and instructions to the storage system, the at least one input apparatus, and the at least one output apparatus.

A computer code configured to execute a method in the present disclosure may be written with one or any combination of a plurality of programming languages. The programming languages may be provided to a processor or a controller of a general purpose computer, a dedicated computer, or other apparatuses for programmable data processing so that the function/operation specified in the flowchart and/or block diagram may be performed when the program code is executed by the processor or controller. A computer code may be performed completely or partly on the machine, performed partly on the machine as an independent software package and performed partly or completely on the remote machine or server.

In the context of the disclosure, a machine-readable medium may be a tangible medium that may contain or store a program intended for use in or in conjunction with an instruction execution system, apparatus, or device. A machine readable medium may be a machine readable signal medium or a machine readable storage medium. A machine readable storage medium may include but not limited to an electronic, magnetic, optical, electromagnetic, infrared, or semiconductor system, apparatus or device, or any appropriate combination thereof. A more specific example of a machine readable storage medium includes an electronic connector with one or more cables, a portable computer disk, a hardware, a random access memory (RAM), a read-only memory (ROM), an erasable programmable read-only memory (an EPROM or a flash memory), an optical fiber device, and a portable optical disk read-only memory (CDROM), an optical storage device, a magnetic storage device, or any appropriate combination of the above.

In order to provide interaction with the user, the systems and technologies described here may be implemented on a computer, and the computer has: a display apparatus for displaying information to the user (for example, a CRT (cathode ray tube) or a LCD (liquid crystal display) monitor); and a keyboard and a pointing apparatus (for example, a mouse or a trackball) through which the user may provide input to the computer. Other types of apparatuses may further be configured to provide interaction with the user; for example, the feedback provided to the user may be any form of sensory feedback (for example, visual feedback, auditory feedback, or tactile feedback); and input from the user may be received in any form (including an acoustic input, a speech input, or a tactile input).

The systems and technologies described herein may be implemented in a computing system including back-end components (for example, as a data server), or a computing system including middleware components (for example, an application server), or a computing system including front-end components (for example, a user computer with a graphical user interface or a web browser through which the user may interact with the implementation mode of the system and technology described herein), or a computing system including any combination of such back-end components, middleware components or front-end components. The system components may be connected to each other through any form or medium of digital data communication (for example, a communication network). Examples of communication networks include: a local area network (LAN), a wide area network (WAN), an internet and a blockchain network.

The computer system may include a client and a server. The client and server are generally far away from each other and generally interact with each other through a communication network. The relationship between the client and the server is generated by computer programs running on the corresponding computer and having a client-server relationship with each other. A server may be a cloud server, also known as a cloud computing server or a cloud host, is a host product in a cloud computing service system, to solve the shortcomings of large management difficulty and weak business expansibility existed in the conventional physical host and Virtual Private Server (VPS) service. A server further may be a server with a distributed system, or a server in combination with a blockchain.

It should be understood that, various forms of procedures shown above may be configured to reorder, add or delete blocks. For example, blocks described in the disclosure may be executed in parallel, sequentially, or in different orders, as long as the desired result of the technical solution disclosed in the present disclosure may be achieved, which will not be limited herein.

The above specific implementations do not constitute a limitation on the protection scope of the disclosure. Those skilled in the art should understand that various modifications, combinations, sub-combinations and substitutions may be made according to design requirements and other factors. Any modification, equivalent replacement, improvement, etc., made within the principle of embodiments of the present disclosure shall be included within the protection scope of the present disclosure.

## Claims

1. A method for reading data, comprising:

   receiving (101) a data reading request, wherein the data reading request comprises a request version number and a data reading address;
   acquiring (102) a current data writing file in response to determining that the data reading request triggers a reading-writing conflict event, wherein, the data writing file comprises a writing version number and transaction information;
   obtaining (103) an adjusted writing version number by adjusting the writing version number based on the request version number in response to determining, based on the request version number, the writing version number and the transaction information, that the data reading request satisfies a version adjustment condition; and
   performing (104) data reading based on the data reading address and the adjusted writing version number.

2. The method of claim 1, wherein, the data writing file further comprises a data writing address, and the method further comprises:
   determining that the data reading request triggers the reading-writing conflict event in response to the data writing address being the same as the data reading address.

3. The method of claim 1 or 2, further comprising:

   determining (201) that the data reading request does not satisfy the version adjustment condition in response to the request version number being less than the writing version number;
   obtaining (202) a transaction state by parsing the transaction information in response to the request version number being greater than or equal to the writing version number;
   determining (203) that the data reading request satisfies the version adjustment condition in response to the transaction state being a target state, wherein the target state comprises a state that the data is being written; and
   determining (204) that the data reading request does not satisfy the version adjustment condition in response to the transaction state being not the target state.

4. The method of claim 3, further comprising:
   performing data reading based on the request version number and the data reading address in response to the request version number being less than the writing version number.

5. The method of any one of claims 1 to 4, wherein obtaining (103) the adjusted writing version number by adjusting the writing version number based on the request version number in response to determining that the data reading request satisfies the version adjustment condition based on the request version number, the writing version number and the transaction information comprises:

   acquiring (301) an adjustment value; and
   adjusting (302) the writing version number based on the request version number and the adjustment value.

**6.** The method of any one of claims 1 to 5, wherein performing (140) data reading based on the data reading address and the adjusted writing version number comprises:

   determining (401) a target reading version number based on the adjusted writing version number;
   determining (402) a target data storing location based on the data reading address; and
   reading (403) data corresponding to the target reading version number stored at the target data storing location.

**7.** An apparatus (600) for reading data, comprising:

   a receiving module (610), configured to receive a data reading request, wherein, the data reading request comprises a request version number and a data reading address;
   an acquiring module (620), configured to acquire a current data writing file in response to determining that the data reading request triggers a reading-writing conflict event, wherein the data writing file comprises a writing version number and transaction information;
   an adjusting module (630), configured to obtain an adjusted writing version number by adjusting the writing version number based on the request version number in response to determining that the data reading request satisfies a version adjustment condition based on the request version number, the writing version number and the transaction information; and
   a reading module (640), configured to perform data reading based on the data reading address and the adjusted writing version number.

**8.** The apparatus (600) of claim 7, wherein, the data writing file further comprises a data writing address, and the apparatus (600) further comprises:
   a first determining module (650), configured to determine that the data reading request triggers the reading-writing conflict event in response to the data writing address being the same as the data reading address.

**9.** The apparatus (600) of claim 7 or 8, further comprising: a second determining module (660), configured to:

   determine that the data reading request does not satisfy the version adjustment condition in response to the request version number being less than the writing version number;
   obtain a transaction state by parsing the transaction information in response to the request version number being greater than or equal to the writing version number;
   determine that the data reading request satisfies the version adjustment condition in response to the transaction state being a target state, wherein the target state comprises a state that the data is being written; and
   determine that the data reading request does not satisfy the version adjustment condition in response to the transaction state being not the target state.

**10.** The apparatus (600) of claim 9, wherein the second determining module (660) is further configured to:
   perform data reading based on the request version number and the data reading address in response to the request version number being less than the writing version number.

**11.** The apparatus (600) of any one of claims 7 to 10, wherein the adjusting module (630) is configured to:

   acquire an adjustment value; and
   adjust the writing version number based on the request version number and the adjustment value.

**12.** The apparatus (600) of any one of claims 7 to 11, wherein the reading module (640) is configured to:

   determine a target reading version number based on the adjusted writing version number;
   determine a target data storing location based on the data reading address; and
   read data corresponding to the target reading version number stored at the target data storing location.

**13.** An electronic device, comprising:

   at least one processor; and
   a memory communicatively connected to the at least one processor; wherein,
   the memory is stored with instructions executable by the at least one processor, and the instructions are performed by the at least one processor, to cause the at least one processor to perform the method of any of claims 1 to 6.

**14.** A non-transitory computer readable storage medium having computer instructions stored thereon, wherein, the computer instructions are configured to cause a computer to perform the method of any of claims 1 to 6.

**15.** A computer program product, comprising a computer program, wherein the computer program is configured to perform the method of any of claims 1 to 6 when performed by a processor.

receive a data reading request including a request version number and a data reading address — 101

↓

acquire data writing file including a writing version number and transaction information in response to determining that the data reading request triggers a reading-writing conflict event — 102

↓

adjust the writing version number based on the request version number in response to determining that the data reading request satisfies a version adjustment condition based on the request version number, the writing version number and the transaction information — 103

↓

perform data reading based on the data reading address and the adjusted writing version number — 104

FIG. 1

determine that the data reading request does not satisfy the version adjustment condition in response to the request version number being less than the writing version number — 201

↓

parse the transaction information to acquire a transaction state in response to the request version number being greater than or equal to the writing version number — 202

↓

determine that the data reading request satisfies the version adjustment condition in response to the transaction state being a target state, the target state includes a state that data is being written — 203

↓

determine that the data reading request does not satisfy the version adjustment condition in response to the transaction state being not the target state — 204

FIG. 2

acquire an adjustment value _301

adjust the writing version number based on the request version number and the adjustment value _302

FIG. 3

determine a target reading version number based on the adjusted writing version number _401

determine a target data storing location based on the data reading address _402

read data corresponding to the target reading version number stored at the target data storing location _403

FIG. 4

start

S501

transaction A writes the intent at a
location key=x

S502

transaction B attempts to read the
intent at the location key=x

S503

the data read by the transaction B is
the intent and Va of the transaction
A is less than Vb of the transaction B

S504

transaction A has
been submitted?

no

S506

transaction A has
been terminated?

no

S508

adjust version number of the intent
(transaction A): Va = Vb + 1

yes

S505

the data written by the
transaction A is read

yes

S507

the data before the
transaction A is read

S509

the intent with adjusted the
version number is written

S510

the data before the transaction
A writes the intent is read

end

FIG. 5

600

apparatus for reading data

610

receiving module

620

acquiring module

630

adjusting module

640

reading module

650

first determining
module

660

second determining
module

FIG. 6

FIG. 7

Europäisches
Patentamt

European
Patent Office

Office européen
des brevets

# EUROPEAN SEARCH REPORT

**Application Number**

**EP 22 19 7097**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2008/034172 A1 (DUFFY JOHN JOSEPH [US] ET AL) 7 February 2008 (2008-02-07) * abstract * * paragraph [0022] – paragraph [0027] * ----- | 1-15 | INV. G06F16/23 |
| A | US 10 331 657 B1 (COLE TIMOTHY DANIEL [US] ET AL) 25 June 2019 (2019-06-25) * abstract * * column 6, line 36 – column 13, line 62 * ----- | 1-15 | |

**TECHNICAL FIELDS SEARCHED (IPC)**

G06F

The present search report has been drawn up for all claims

| Place of search | Date of completion of the search | Examiner |
|---|---|---|
| The Hague | 24 January 2023 | Dumitrescu, Cristina |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

......................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 19 7097

24-01-2023

| Patent document cited in search report | | Publication date | Patent family member(s) | | Publication date |
|---|---|---|---|---|---|
| US 2008034172 | A1 | 07-02-2008 | EP | 2047369 A1 | 15-04-2009 |
| | | | RU | 2009103633 A | 10-08-2010 |
| | | | US | 2008034172 A1 | 07-02-2008 |
| | | | US | 2008319997 A1 | 25-12-2008 |
| | | | WO | 2008018963 A1 | 14-02-2008 |
| US 10331657 | B1 | 25-06-2019 | NONE | | |